# EUROPEAN PATENT APPLICATION

(11) **EP 4 080 507 A1**
(43) Date of publication of application: **26.10.2022**
(21) Application number: 22161121.3
(22) Date of filing: 09.03.2022
(51) Int. Cl.: G11B 27/031, G11B 27/34, H04N 21/858

(54) **METHOD AND APPARATUS FOR EDITING OBJECT, ELECTRONIC DEVICE AND STORAGE MEDIUM**

(30) Priority: 20.04.2021 CN 202110426862
(71) Applicant: Beijing Dajia Internet Information Technology Co., Ltd., Beijing 100085 (CN)
(72) Inventor: LI, Zhao, Beijing, 100085 (CN); ZHAO, Shan, Beijing, 100085 (CN); SHU, Ying, Beijing, 100085 (CN)
(74) Representative: Vossius & Partner Patentanwälte Rechtsanwälte mbB

(57) **Abstract**

The present disclosure relates to a method for editing an object, apparatus, electronic device and storage medium. The method for editing an object may include playing a posted object on a current play page, wherein the current play page comprises a re-editing component, and the posted object comprises an original object and object configuration information; in response to detecting an edit instruction triggered by the re-editing component, jumping to an edit page, wherein the edit page comprises an updating component; in response to detecting an update instruction triggered by the updating component, updating the object configuration information and displaying the updated object configuration information on the edit page, wherein the object configuration information comprises configuration information associated with content of the original object; and in response to detecting an upload instruction, uploading the updated object configuration information, so that when a user terminal plays an updated posted object, the played content comprises the original object and the updated object configuration information. The arrangements of the present disclosure may retain more original data while simplifying user operations, thereby improving user experience as a whole.

## Description

### TECHNICAL FIELD

The present disclosure relates to the field of Internet technologies, and in particular, to method and apparatus for editing an object, electronic device and storage medium.

### BACKGROUND

At present, mobile terminals are more and more widely used in on-demand and live-streaming video from Internet multimedia. With the continuous development of mobile Internet technology, the speed of mobile network has also been greatly improved, which also increases the scenarios in which users can be entertained with mobile videos. At the same time, mobile videos are becoming increasingly popular due to convenience and efficiency, especially when users watch video-on-demand/live-streaming contents in their spare time or even during commuting, so that the users can make full use of idle time to watch video programs of interest.

### SUMMARY

The present disclosure provides a method for editing an object, apparatus, electronic device and storage medium. The technical solutions of the present disclosure are as follows.

According to some arrangements of the present disclosure, a method for editing an object is provided. The method for editing the object is applied to an electronic device and may include playing a posted object on a current play page, wherein the current play page comprises a re-editing component, and the posted object comprises an original object and object configuration information; in response to detecting an edit instruction triggered by the re-editing component, jumping to an edit page, wherein the edit page comprises an updating component; in response to detecting an update instruction triggered by the updating component, updating the object configuration information and displaying the updated object configuration information on the edit page, wherein the object configuration information comprises configuration information associated with content of the original object; and in response to detecting an upload instruction, uploading the updated object configuration information, wherein in response to that a user terminal plays an updated posted object, the played content comprises the original object and the updated object configuration information.

In some arrangements, the object configuration information comprises first dimension configuration information and second dimension configuration information; the first dimension configuration information is object parameter configuration information, and the second dimension configuration information is object content configuration information; or the first dimension configuration information is the object content configuration information, and the second dimension configuration information is the object parameter configuration information; the object content configuration information is configuration information associated with the content of the original object, and the object parameter configuration information is configuration information associated with external parameters of the original object.

In some arrangements, the object parameter configuration information comprises at least one of: geographic location information, topic information to which the original object belongs, description information of the original object, and friend reminder information; and the object content configuration information comprises at least one of: soundtrack information, clip information, picture size adjustment information, front cover information, and additional picture display information.

In some arrangements, the re-editing component comprises a first re-editing component; wherein said in response to detecting the edit instruction triggered by the re-editing component, jumping to the edit page, and in response to detecting the update instruction triggered by the updating component, updating object configuration information and displaying the updated object configuration information on the edit page may include in response to detecting a first edit instruction triggered by the first re-editing component, jumping to a first edit page, wherein the first edit page comprises a first updating component; and in response to detecting a first update instruction triggered by the first updating component, updating the first dimension configuration information and displaying the updated first dimension configuration information on the edit page.

In some arrangements, the re-editing component comprises a second re-editing component; wherein said in response to detecting the edit instruction triggered by the re-editing component, jumping to the edit page, and in response to detecting the update instruction triggered by the updating component, updating object configuration information and displaying the updated object configuration information on the edit page may include in response to detecting a second edit instruction triggered by the second re-editing component, jumping to a second edit page, wherein the second edit page comprises a second updating component; and in response to detecting a second update instruction triggered by the second updating component, updating the second dimension configuration information and displaying the updated second dimension configuration information on the edit page.

In some arrangements, said in response to detecting the edit instruction triggered by the re-editing component, jumping to the edit page, wherein the edit page comprises the updating component, and in response to detecting the update instruction triggered by the updating component, updating object configuration information and displaying the updated object configuration information on the edit page may include in response to detecting the edit instruction triggered by the re-editing component, jumping to a first edit page, wherein the first edit page comprises a first updating component and a page jumping component; in response to detecting a first update instruction triggered by the first updating component, updating the first dimension configuration information and displaying the updated first dimension configuration information on the first edit page; in response to detecting a page jump instruction triggered by the page jumping component, jumping to a second edit page, wherein the second edit page comprises a second updating component; and in response to detecting a second update instruction triggered by the second updating component, updating the second dimension configuration information and displaying the updated second dimension configuration information on the second edit page.

In some arrangements, the method for editing the object further include in response to detecting a play instruction of the posted object, acquiring the posted object from the server.

In some arrangements, the edit page further comprises a preview component; the method further include in response to detecting a preview instruction triggered by the preview component, jumping to a preview page and playing the updated posted object on the preview page, wherein the played content comprises the original object and the updated object configuration information.

In some arrangements, the posted object further comprises interactive operation information; wherein said in response to detecting the upload instruction, uploading the updated object configuration information, wherein in response to that the user terminal plays the updated posted object, the played content comprises the original object and the updated object configuration information may include in response to detecting the upload instruction, uploading the updated object configuration information, wherein in response to that the user terminal plays the updated posted object, the played content comprises the original object, the updated object configuration information and the interactive operation information.

According to some arrangements of the present disclosure, an apparatus for editing an object is provided. The apparatus for editing an object may include a playing module configured to play a posted object on a current play page, wherein the current play page comprises a re-editing component, and the posted object comprises an original object and object configuration information; a jumping module configured to jump to an edit page in response to detecting an edit instruction triggered by the re-editing component, wherein the edit page comprises an updating component; a displaying module configured to update the object configuration information and display the updated object configuration information on the edit page, in response to detecting an update instruction triggered by the updating component, wherein the object configuration information comprises configuration information associated with content of the original object; and a transmission module configured to upload the updated object configuration information in response to detecting an upload instruction, wherein in response to that a user terminal plays an updated posted object, the played content comprises the original object and the updated object configuration information.

In some arrangements, the object configuration information comprises first dimension configuration information and second dimension configuration information; the first dimension configuration information is object parameter configuration information, and the second dimension configuration information is object content configuration information; or the first dimension configuration information is the object content configuration information, and the second dimension configuration information is the object parameter configuration information; the object content configuration information is configuration information associated with the content of the original object, and the object parameter configuration information is configuration information associated with external parameters of the original object.

In some arrangements, wherein the object parameter configuration information comprises at least one of: geographic location information, topic information to which the original object belongs, description information of the original object, and friend reminder information; and the object content configuration information comprises at least one of: soundtrack information, clip information, picture size adjustment information, front cover information, and additional picture display information.

In some arrangements, the re-editing component comprises a first re-editing component; wherein the jumping module is configured to jump to a first edit page, in response to detecting a first edit instruction triggered by the first re-editing component, wherein the first edit page comprises a first updating component; and the displaying module is configured to update the first dimension configuration information and display the updated first dimension configuration information on the edit page, in response to detecting a first update instruction triggered by the first updating component.

In some arrangements, the re-editing component comprises a second re-editing component; the jumping module is configured to jump to a second edit page in response to detecting a second edit instruction triggered by the second re-editing component; wherein the second edit page comprises a second updating component; and the displaying module is configured to update the second dimension configuration information and display the updated second dimension configuration information on the edit page, in response to detecting a second update instruction triggered by the second updating component.

In some arrangements, the jumping module is configured to jump to a first edit page in response to detecting the edit instruction triggered by the re-editing component; wherein the first edit page comprises a first updating component and a page jumping component; the displaying module is configured update the first dimension configuration information and display the updated first dimension configuration information on the first edit page, in response to detecting a first update instruction triggered by the first updating component; the jumping module is configured to jump to a second edit page in response to detecting a page jump instruction triggered by the page jumping component; wherein the second edit page comprises a second updating component; and the displaying module is configured to update the second dimension configuration information and display the updated second dimension configuration information on the second edit page, in response to detecting a second update instruction triggered by the second updating component.

In some arrangements, the apparatus for editing the object further include an acquisition module configured to acquire the posted object from the server in response to detecting a play instruction of the posted object.

In some arrangements, the edit page further comprises a preview component; the playing module is configured to jump to a preview page and play the updated posted object on the preview page, in response to detecting a preview instruction triggered by the preview component, wherein the played content comprises the original object and the updated object configuration information.

In some arrangements, the posted object further comprises interactive operation information; the transmission module is configured to upload the updated object configuration information in response to detecting the upload instruction, wherein in response to that the user terminal plays the updated posted object, the played content comprises the original object, the updated object configuration information and the interactive operation information.

According to some arrangements of the present disclosure, an electronic device is provided. The electronic device may include: a processor; and memory for storing instructions executable by the processor; wherein, the processor is configured to perform the method for editing the object according to any one of some arrangements mentioned above.

According to some arrangements of the present disclosure, a computer-readable storage medium is provided. When the instructions in the computer-readable storage medium are executed by a processor of an electronic device, the method for editing the object according to any one of some arrangements mentioned above is implemented by the electronic device.

According to some arrangements of the present disclosure, a computer program product is provided. The computer program product comprises a computer program, the computer program is stored in a readable storage medium, and when at least one processor of a computer device reads from the readable storage medium and executes the computer program, the method for editing an object according to any one of some arrangements mentioned above is implemented by the computer device.

The technical solutions provided by the arrangements of the present disclosure bring at least the following beneficial effects.

By playing a posted object on a current play page, wherein the current play page comprises a re-editing component, and the posted object comprises an original object and object configuration information; in response to detecting an edit instruction triggered by the re-editing component, jumping to an edit page, wherein the edit page comprises an updating component; in response to detecting an update instruction triggered by the updating component, updating the object configuration information and displaying the updated object configuration information on the edit page, wherein the object configuration information comprises configuration information associated with content of the original object; and in response to detecting an upload instruction, uploading the updated object configuration information, wherein in response to that a user terminal plays an updated posted object, the played content comprises the original object and the updated object configuration information, the arrangements of the present disclosure can directly modify and upload the object configuration information to obtain the updated posted object, thereby avoiding re-uploading the entire modified posted object, and at the same time retaining the original interactive operation information, so as to simplify the user operation, and at the same time, more original data is retained, which improves the user experience as a whole.

It should be understood that the above general description and the following detailed description are only exemplary and explanatory, and cannot limit the present disclosure.

### BRIEF DESCRIPTION OF THE DRAWINGS

The accompanying drawings, which are incorporated into and constitute a part of this specification, illustrate arrangements consistent with the present disclosure, and together with the description, serve to explain the principles of the present disclosure and do not improperly limit the present disclosure.
FIG 1 is a schematic diagram of an application environment according to some arrangements;
FIG 2 is a flowchart of a method for editing an object according to some arrangements;
FIG. 3 is a flowchart of a method for posting an object according to some arrangements;
FIG 4 is a schematic diagram of a current play page according to some arrangements;
FIG 5 is a schematic diagram of a current play page according to some arrangements;
FIG. 6 is a schematic diagram of a first edit page according to some arrangements;
FIG. 7 is a schematic diagram of a second edit page according to some arrangements;
FIG 8 is a schematic diagram of a current play page according to some arrangements;
FIG 9 is a block diagram of an apparatus for editing an object according to some arrangements;
FIG 10 is a block diagram of an electronic device for editing an object according to some arrangements.

### DETAILED DESCRIPTION

In order to make those skilled in the art better understand the technical solutions of the present disclosure, the technical solutions in the arrangements of the present disclosure will be clearly and completely described below with reference to the accompanying drawings.

It should be noted that the terms "first", "second" and the like in the description and claims of the present disclosure and the above-mentioned drawings are used to distinguish similar first objects, and are not necessarily used to describe a specific order or a chronological order. It is to be understood that the data used in this way are interchangeable under appropriate circumstances so that the arrangements of the disclosure described herein can be practiced in sequences other than those illustrated or described herein. The implementations described in the illustrative examples below are not intended to represent all implementations consistent with this disclosure. Rather, they are merely examples of apparatus and methods consistent with some aspects of the present disclosure as recited in the appended claims.

In the related art, once a work (such as a video or a picture) is posted by a poster, if the poster wants to modify his or her work, he or she can only delete the previously uploaded work, and then re-upload the modified work, which will cause the poster repeats a lot of previous pre-posting work, wastes the poster's time and reduces the user's experience.

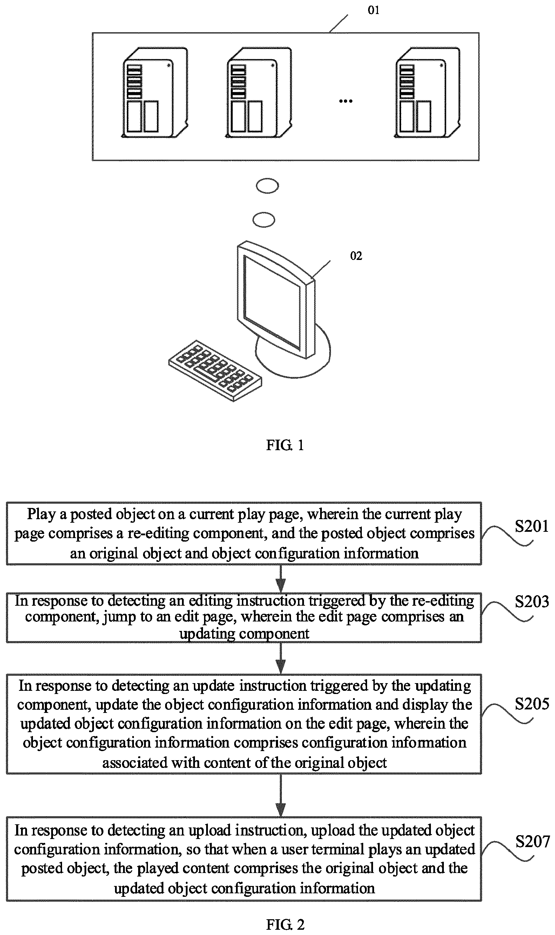

Referring to FIG. 1, which is a schematic diagram of an application environment of an object editing method according to some arrangements. As shown in FIG. 1, the application environment may include a server 01 and an electronic device 02.

In some possible arrangements, the server 01 may acquire all resources of the posted object from the server 01 after receiving a play instruction sent by the electronic device 02. After object configuration information of the posted object is updated, the updated object configuration information may be uploaded to the server 01 based on an upload instruction detected by the electronic device 02. In some arrangements, the server may include an independent physical server, or a server cluster or distributed system composed of multiple physical servers, or may include cloud servers which can provide cloud services, cloud databases, cloud computing, cloud functions, cloud storage, network services, cloud communications, middleware services, domain name services, security services, Content Delivery Network (CDN), and basic cloud computing services such as big data and artificial intelligence platforms.

In some possible arrangements, the above-mentioned electronic device 02 plays the posted object on a current play page, and the current play page includes a re-editing component; the posted object includes an original object and object configuration information. In response to that an edit instruction triggered by the re-editing component is detected, the electronic device 02 jumps to an edit page. The edit page includes an updating component. In response to detecting an update instruction triggered by the updating component, the electronic device 02 updates the object configuration information, and displays the updated object configuration information on the edit page. The configuration information includes configuration information associated with content of the original object. In response to that the upload instruction is detected, the electronic device 02 uploads the updated object configuration information, so that when the user terminal plays the updated posted object, the played content includes the original object and the updated object configuration information. Wherein, the above-mentioned electronic devices may include, but are not limited to, smart phones, desktop computers, tablet computers, notebook computers, smart speakers, digital assistants, augmented reality (AR)/virtual reality (VR) devices, other kinds of electronic devices such as smart wearable devices. The above-mentioned electronic devices may also be software running on the above-mentioned electronic device, such as an application program, an applet, and the like. In some arrangements, the operating system running on the electronic device may include, but is not limited to, an Android system, an IOS system, Linux, Windows, Unix, and the like.

In some possible arrangements, the electronic device 02 and the server 01 may be connected through a wired link, or may be connected through a wireless link.

FIG. 2 is a flowchart of a method for editing object method according to some exemplary arrangements. As shown in FIG. 2, the method for editing object method can be applied to electronic devices, and can also be applied to other node devices. The method for editing object method includes the following steps:
In S201, a posted object is played on a current play page, the current play page includes a re-editing component, and the posted object includes an original object and object configuration information.

In S203, in response to detecting an edit instruction triggered by the re-editing component, the electronic device jumps to the edit page. The edit page may include an updating component.

In S205, in response to detecting an update instruction triggered by the updating component, the object configuration information is updated, and the updated object configuration information is displayed on the edit page, and the object configuration information may include configuration information associated with content of the original object.

In S207, in response to detecting an upload instruction, the updated object configuration information is uploaded, so that when the user terminal plays the updated posted object, the played content includes the original object and the updated object configuration information.

In the arrangements of the present disclosure, the above-mentioned posted object may be a posted video, a posted picture (single picture or multiple pictures), or other posted things.

In some possible arrangements, in addition to the original object and the object configuration information, the above-mentioned posted object may also include interactive operation information left by the poster and/or the viewer. In some arrangements, if the posted object is a posted video, it may include an original video, video configuration information, and interactive operation information left by the poster and/or the viewer after posting. In some arrangements, if the posted object is a posted picture, it may include an original picture, picture configuration information, and interactive operation information left by the poster and/or the viewer after posting. In the arrangements of the present disclosure, a posted video will be used as an example for description. For specific arrangements of other feasible posted objects, reference may be made to specific arrangements of posted video, which will not be repeated.

In some possible arrangements, the above-mentioned interactive operation information may include user browsing information (including the browsing numbers of users), comment information and/or reply information of posters and/or viewers, and reward information of viewers (including the number of rewards and the amount of rewards), information about viewers give likes, the viewer's forwarding information, etc.

In some arrangements of the present disclosure, since the main contents of steps S201 to S207 involve posted objects, or in other words, involve a process that, after the work of the poster has been posted (the posting may include posting an object for the first time, or posting the object multiple times), the poster uses the electronic device to modify the posted object, and uploads it to the server again for posting. In this case, the posted object has a previous posting process. The previous posting process may be a first posting process or a non-first posting process. The following will take the first posting process of the posted object as an example for description.

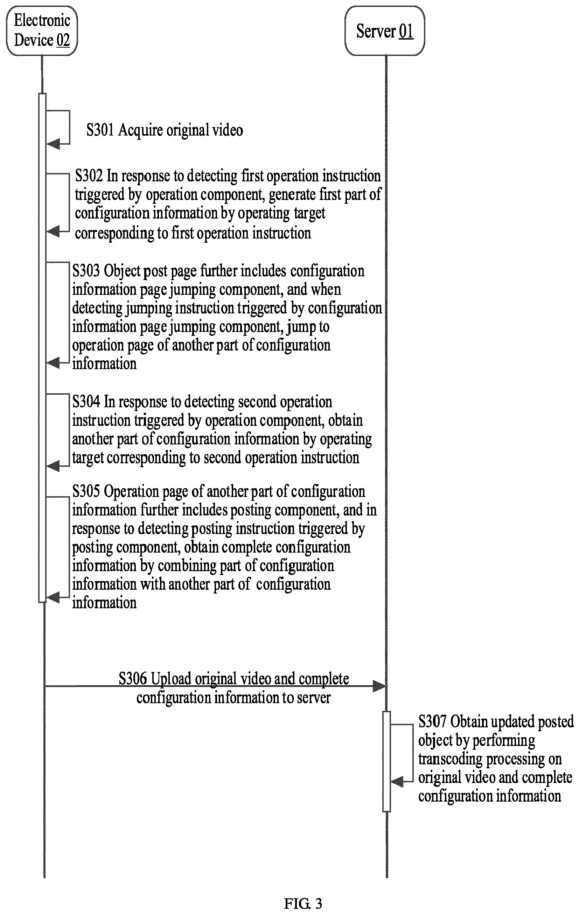

FIG. 3 is a flowchart of a method for posting an object according to some arrangements. Referring to FIG.3, the method for posting the object may include follow steps.

In S301, an original video is acquired.

In some optional arrangements, the user first logs in a video application program or a video website through an electronic device, and enters a page for posting an object to be posted, that is, an object post page, and the object post page includes a video uploading component. After the user clicks on the video uploading component, the electronic device may jump to a storage space of the electronic device (such as a photo album in the mobile phone), so that the user can select the desired original video from the storage space. When the electronic device detects that a corresponding region of a certain video is touched, the video application program can fetch the video and get the original video. In some arrangements, the above-mentioned original video may be a video captured by a user. In some arrangements, the electronic device may jump back to the object post page while acquiring the original video. At this time, the object post page may include several operation components about configuration information.

In S302, in response to detecting a first operation instruction triggered by the operation component, a first part of configuration information is generated by operating a target corresponding to the first operation instruction.

In the arrangement of the present disclosure, the above-mentioned object post page may include an addition component for soundtrack information, which is used to add soundtrack information. The above-mentioned object post page may include an operation component for clipping information, which is used to clip the original video (for example, clipping into 20 second from original 40 second). The above-mentioned object post page may include an adjustment component for picture size information, which is used to adjust the picture size of the original video. The above-mentioned object post page may include an addition component for front cover information, which is used to add front cover information. The above-mentioned object post page may further include an operation component for additional picture display information, which is used to add stickers, special effects, text, beauty and/or filters, etc. on the original video.

In some arrangements, all the above-mentioned operation components for the configuration information can be used, so as to add further configuration information to the original video, and some operation components can also be used according to the actual needs of the user. In the arrangements of the present disclosure, when the above-mentioned operation components are used, the electronic device may save the configuration information according to its usage, for example, save soundtrack information, clip information, picture size information, front cover information and/or additional picture display information.

In S303, the object post page further includes a configuration information page jumping component, and in response to detecting a jumping instruction triggered by the configuration information page jumping component, the terminal device jumps to an operation page of another part of configuration information.

In some arrangements of the present disclosure, the operation page of another part of configuration information may include operation components for another part of configuration information, such as an addition component for geographic location information, an addition component for topic information, an addition component for description information, and an addition component for friend reminder information.

In S304, in response to detecting a second operation instruction triggered by the operation component of another part of configuration information, another part of configuration information is obtained by operating a target corresponding to the second operation instruction.

For example, in response to the user clicks on the addition component for the geographic location information, an input box will appear on the page, and the user can fill in current geographic information in the input box. In some arrangements, in response to the user clicks on the addition component for the geographic location information, some selection boxes corresponding to some geographic information will appear on the page, and users can select the geographic location they want. In response to detecting, by the electronic device, that the user has entered geographic information or has selected certain geographic information, and detecting that a region corresponding to a confirmation key (i.e., OK key) is touched, this configuration information about the geographic location information can be obtained.

Similarly, in response to the user clicks on the addition component for the description information, an input box for the description information can appear on the page, and the user can fill in a text scheme of the original video in this input box, that is, sentences introducing the original video. In response to the electronic device detects that the user inputs the description information, and detects that a region corresponding to a confirmation key (i.e., OK key) is touched, the configuration information about the description information can be obtained.

Likewise, the electronic device can obtain two configuration information, namely topic information and friend reminder information, with reference to the above-mentioned content, so that the electronic device obtains the another part of configuration information.

In S305, the operation page of the another part of configuration information further includes a posting component, and in response to detecting a posting instruction triggered by the posting component, the electronic device obtain a complete configuration information by combining the first part of configuration information and another part of configuration information.

In S306, the original video and the complete configuration information are uploaded to the server.

In S307, after receiving the original video and the complete configuration information, the server may obtain an updated posted object or a modified posted object by performing a transcoding processing on the original file and the complete configuration information.

In some arrangements of the present disclosure, the implementation of the foregoing steps S301 to S307 is only an exemplary implementation, and does not limit other implementations obtained by transformation based on this implementation.

In some possible arrangements, all operation components can be set on the object post page, and there are not two pages (i.e., the object post page and the operation page for the another part of configuration information) as in the above-mentioned arrangement, in which each page contains a part of operation components, and the two pages are hierarchal.

In some possible arrangements, in addition to the posting component, the operation page of the above-mentioned the another part of configuration information may also be provided with a return component. In response to the electronic device detects a return instruction triggered by the return component, the operation page of the another part of configuration information may be returned to the object post page, and the configuration information for the first part of configuration information is modified and saved again.

In some possible arrangements, in case that a user first logs in a video application program or a video website through an electronic device and enters an object post page, since the object post page is entered by the user on the basis of a certain element, the object post page may carry some configuration information itself. For example, in response to the user entering the object post page by long-pressing a certain piece of music, when the electronic device displays the object post page, the object post page carries this music itself, that is to say, the music will become configuration information for the original video. In response to the user entering the object post page by long-pressing a certain picture, when the electronic device displays the object post page, the object post page carries this picture itself, that is, the picture will become configuration information for one front cover of the original video.

Therefore, in the arrangement of the present disclosure, the manner of entering the object post page may be determined according to different operations of the user on the electronic device.

In the arrangement of the present disclosure, after obtaining the posted object (or the posted video), the server may send the posted video to the electronic device of other users, based on a play request of other users.

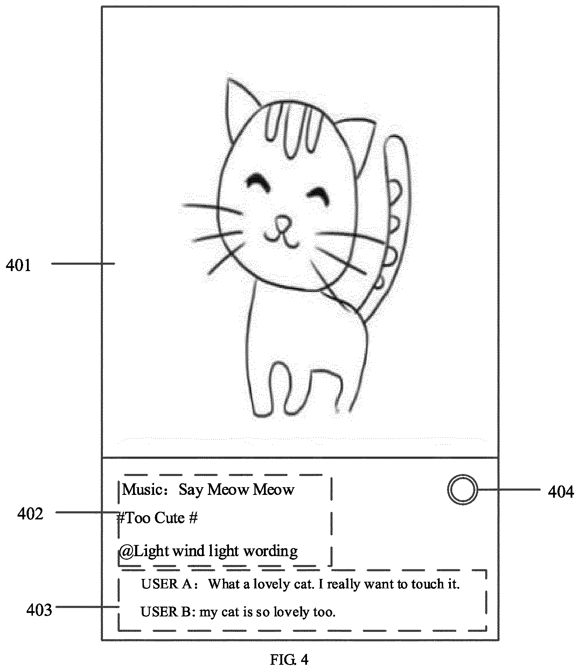

In some arrangements of the present disclosure, after the poster uploads the original video and configuration information, the electronic device may delete cache of the original video and configuration information, and generate identification information of the above-mentioned posted object on the posted page of the video application program. In response to that the poster opens the posted page and clicks identification information of the posted object, the electronic device can detect a play instruction for the posted object. At this time, since there is no cache of the posted object in the electronic device, the posted object can be obtained from the server, and the electronic device jumps to the current play page to play the posted object. In this way, the current play page as shown in FIG. 4 can be obtained, and the current play page may include the original object (i.e., the original video) 401, object configuration information (i.e., video configuration information) 402, interactive operation information (i.e., user browsing information, comment information and/or reply information from the poster and/or the viewer, reward information of the viewer, like given information of the viewer, forwarding information of the viewer) 403 and the re-editing component 404.

In this case, the posted object is not cached in the electronic device, which can greatly reduce the memory occupation of the electronic device and save hardware resources.

In some arrangements, after the poster uploads the original video and configuration information, the original video and composed configuration information can also be cached, so that in response to that the electronic device detects the play instruction of the posted object, there is no need to spend time and communication resource to re-download original video and configuration information.

In S203, in response to detecting an edit instruction triggered by the re-editing component, the electronic device jumps to the edit page. The edit page may include an updating component.

In S205, in response to detecting an update instruction triggered by the updating component, the object configuration information is updated, and the updated object configuration information is displayed on the edit page, and the object configuration information may include configuration information associated with content of the original object.

In some arrangements of the present disclosure, the above-mentioned object configuration information includes geographic location information, topic information to which the original object belongs, description information of the original object, friend reminder information, soundtrack information, clip information, picture size adjustment information, front cover information, additional picture display information, etc. The additional picture display information may include special effect information, sticker information, text information, filter information, beauty information, and the like.

In some arrangements, all the object configurations above can be regarded as configuration information in one dimension. Whether it is the configuration for object parameters or the configuration for object content, when defining, it can be defined as configuration information in one dimension. In this way, in response to detecting an edit instruction triggered by the re-editing component, the electronic device can jump to the edit page, and the edit page may include the updating component for the configuration information of each object.

However, although the arrangement in the above paragraphs can be implemented, setting the updating component for the configuration information of each object on one edit page may result in crowded arrangement of the respective components on the edit page, and finally cause the page to be unsightly. And in practical applications, according to the properties of the above configuration information, the above configuration information can be roughly divided into a configuration for internal content of the original object and a configuration for external parameters of the original object. For example, soundtrack information, clip information, picture size adjustment information, front cover information, and additional picture display information can be considered as the configuration for the internal content of the original object. The geographic location information, topic information to which the original object belongs, description information of the original object and friend reminder information can be considered as the configuration for external parameters of the original object. In some arrangements, soundtrack information, clip information, picture size adjustment information, and additional picture display information can be considered as the configuration for the internal content of the original object, and the geographic location information, topic information to which the original object belongs, description information of the original object, front cover information and friend reminder information can be considered as the configuration for external parameters of the original object. That is to say, the configuration for the internal content of the original object can be a control processing of internal factors such as the size of the original video itself, picture displaying, etc., and the configuration for the external parameters of the original object can be an additional processing of external factors such as the geographic location information, topic information, etc. attached to the original video.

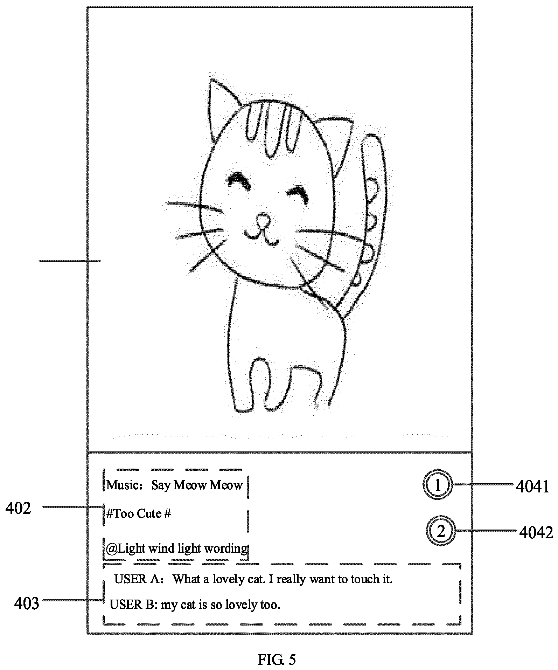

Based on this, in some optional arrangements, the object configuration information may include first dimension configuration information and second dimension configuration information. The first dimension configuration information may be object parameter configuration information, and the second dimension configuration information may be object content configuration information. In some arrangements, the first dimension configuration information may be object content configuration information, and the second dimension configuration information may be object parameter configuration information. The object content configuration information is configuration information associated with the content of the original object, and the object parameter configuration information is configuration information associated with external parameters of the original object. Wherein, the object parameter configuration information includes at least one of the following: geographic location information, topic information to which the original object belongs, description information of the original object, and friend reminder information, and the object content configuration information includes at least one of the following: soundtrack information, clip information, picture size adjustment information, front cover information, and additional picture display information. Based on this, the editing component on the current play page can be divided into a first re-editing component 4041 and a second re-editing component 4042, as shown in FIG. 5.

In some arrangements, the first re-editing component 4041 and the second re-editing component 4042 may respectively correspond to two edit pages, and each of the two edit pages contains an updating component corresponding to the first dimension configuration information and an updating component corresponding to the second dimension configuration information, respectively. In this way, the two edit pages respectively contain updating components corresponding to part of configuration information, so that the positions of the components can be planned in a more orderly and tidy manner and the final displayed edit page is beautiful and neat.

In some optional arrangements, in the case where the re-editing component includes the first re-editing component, the content in S203 may be replaced with: in response to detecting the first edit instruction triggered by the first re-editing component, the electronic device may jump to the first edit page. Wherein, the first edit page includes a first updating component. The content in S205 can be replaced with: in response to detecting the first update instruction triggered by the first updating component, the electronic device may update the first dimension configuration information, and display the updated first dimension configuration information on the edit page.

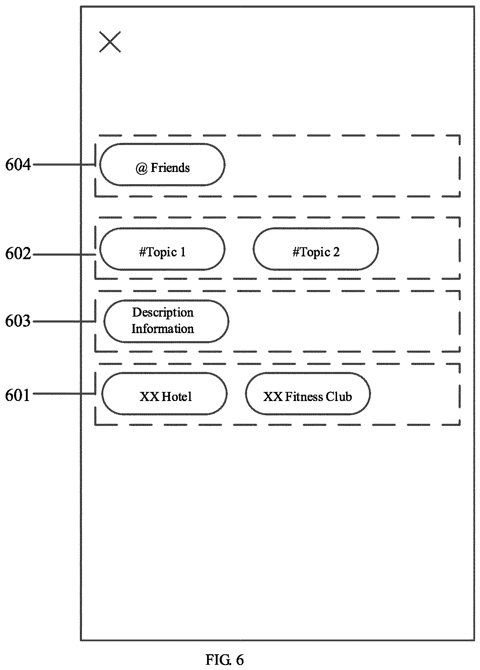

In some arrangements, the first updating component may include a component corresponding to the first dimension configuration information. Assuming that the first dimension configuration information is object parameter configuration information, the first updating component may include a first updating component corresponding to the geographic location information 601, a first updating component corresponding to the topic information to which the original object belongs 602, a first updating component corresponding to the description information of the original object 603, and a first updating component corresponding to the friend reminder information 604, as shown in FIG. 6. For example, in response to detecting the first update instruction triggered by the first updating component corresponding to the description information 603, the electronic device may update the previous description information based on the user's input, and display the updated description information on the edit page.

In some optional arrangements, in the case where the re-editing component includes a second re-editing component, the content in step S203 may be replaced with: in response to detecting a second edit instruction triggered by the second re-editing component, the electronic device may jump to a second edit page, wherein the second edit page includes a second updating component. The content in step S205 can be replaced with: in response to detecting the second update instruction triggered by the second updating component, the electronic device may update the second dimension configuration information and display the updated second dimension configuration information on the edit page.

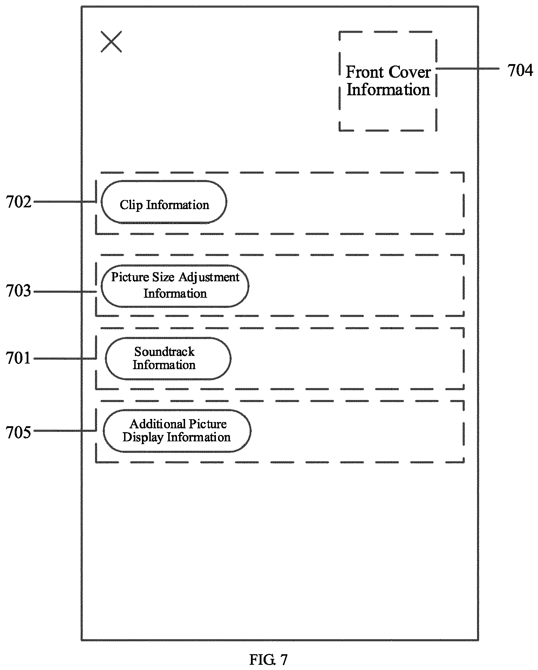

In some arrangements, the second updating component may include a component corresponding to the second dimension configuration information. Assuming that the second dimension configuration information is the object content configuration information, the second updating component may include a second updating component corresponding to the soundtrack information 701, a second updating component corresponding to the clip information 702, a second updating component corresponding to picture size adjustment information 703, a second updating component corresponding to the front cover information 704, and a second updating component corresponding to the additional picture display information 705, as shown in FIG 7. For example, in response to detecting a second update instruction triggered by the second updating component corresponding to the clip information 702, the electronic device may obtain a new editing result of the original object based on the user's edit instruction, and can convert the new editing result into text and display it in the on the edit page.

Since the first dimension configuration information and the second dimension configuration information have the same status in the above arrangements, the corresponding edit pages (the first edit page and the second edit page) can be entered through the two re-editing components of the current play page. In this way, not only the logic is clear, but also the positions of the components can be planned on the edit page in a more orderly manner, so that the final displayed edit page is beautiful and tidy.

In some possible arrangements, as shown in FIG. 4, on the current play page, there is only one re-editing component 404, and the updating components corresponding to the configuration information are implemented based on a logic of current play page - a first edit page - a second edit page, but not every updating component corresponding to configuration information is set on one edit page.

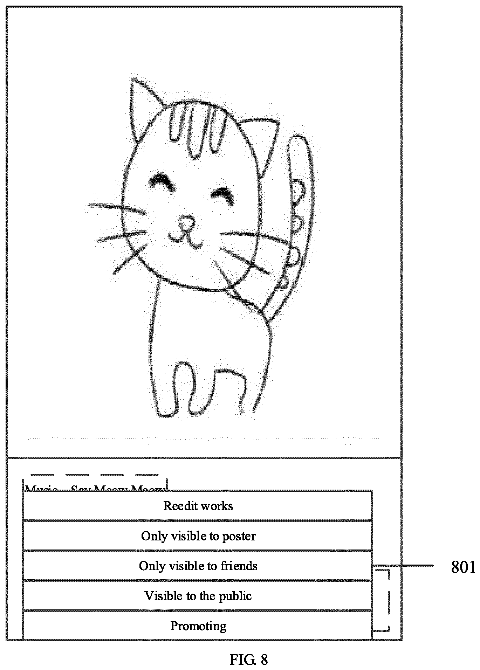

In some optional arrangements, in addition to the re-editing component that is always displayed on the current play page, as shown in FIG 4, it can also be a hidden re-editing component. Only when a preset position on the current play page is touched, the hidden re-editing component will be displayed on the current play page. As shown in FIG. 8, in response to that the preset position on the current play page is touched, the re-editing components 801 will be displayed on the current play page. When one of re-editing components 801 is touched, the terminal device enters and jumps to the first edit page shown in FIG. 6. The first edit page in FIG. 6 not only includes one or more first updating components (such as, 601, 602, 603 and 604), but also includes a page jumping component (not shown in FIG. 6). In response to detecting the first update instruction triggered by the first updating component, the first dimension configuration information can be updated, and the updated first dimension configuration information is displayed on the first edit page.

In some optional arrangements, the first updating component may include a component corresponding to the first dimension configuration information. Assuming that the first dimension configuration information is object parameter configuration information, the first updating component may include a first updating component corresponding to the geographic location information 601, a first updating component corresponding to the topic information to which the original object belongs 602, a first updating component corresponding to the description information of the original object 603, and a first updating component corresponding to the friend reminder information 604, as shown in FIG. 6. For example, in response to detecting the first update instruction triggered by the first updating component corresponding to the description information 603, the electronic device may update the previous description information based on the user's input, and display the updated description information on the edit page.

In response to detecting a page jump instruction triggered by the page jumping component, the electronic device may jump to a second edit page, and the second edit page includes one or more second updating components. In response to detecting the second update instruction triggered by the second updating component, the second dimension configuration information is updated, and the updated second dimension configuration information is displayed on the second edit page. In some optional arrangements, the second updating component may include a component corresponding to the second dimension configuration information. Assuming that the second dimension configuration information is the object content configuration information, the second updating component, as shown in FIG 7, may include a second updating component corresponding to the soundtrack information 701, a second updating component corresponding to the clip information 702, a second updating component corresponding to picture size adjustment information 703, a second updating component corresponding to the front cover information 704, and a second updating component corresponding to the additional picture display information 705. For example, in response to detecting a second update instruction triggered by the second updating component corresponding to the clip information 702, the electronic device may obtain a new clipping result of the original object based on the user's clip instruction, and can convert the new clipping result into text and display it in the on the edit page.

In this case, since the update of the configuration information is implemented according to the logic of the current play page - the first edit page - the second edit page, and there is only one logic line in the actual development process of technicians, so the work of starting operation and maintenance can be reduced, compared with two logic lines. At the same time, the above implementation manners can increase the flexibility of the solution, so that the implementation manner can give users more experience within a possible range.

In a S207, in response to detecting an upload instruction, the updated object configuration information is uploaded, so that when the user terminal plays the updated posted object, the played content includes the original object and the updated object configuration information.

In some possible arrangements, in response to detecting the upload instruction, the electronic device uploads the updated object configuration information, so that when the user terminal plays the updated posted object, the played content may include the original object, the updated object configuration information and interactive operation information. The updated object configuration information may include first dimension configuration information and/or second dimension configuration information.

In some possible arrangements, between updating the object configuration information on the electronic device and uploading the updated object configuration information, other user terminals still play the previously posted information, and only after the server receives the updated configuration information and transcodes it, other user terminals can see the updated posted object. Moreover, between updating the object configuration information on the electronic device and other user terminals still playing the previously posted information, in response to that other user terminals further leave new interactive operation information, the electronic device will upload the updated object configuration information after detecting the upload instructions, so that the user terminals play the updated posted object and the played content may include the original object, the updated object configuration information and the updated interactive operation information.

In some arrangements of the present disclosure, an upload component may be set in the edit page (either the first edit page or the second edit page), and in response to detecting an upload instruction triggered by the upload component, the electronic device may upload the updated object configuration information. In some arrangements, the original object and the updated object configuration information are uploaded. After receives the uploaded information, the server may transcode it. When other users may view the updated posted object, the original object and interactive operation information are unchanged, but only the previous configuration information is updated. For example, assuming that the re-editing is to update the soundtrack information from music A to music B, after the server performs transcoding according to the configuration information, the posted object containing the music B is obtained.

In some possible arrangements, the edit page may also include a preview component. After displaying the updated object configuration information on the edit page, the method for posting the object further includes: in response to detecting a preview instruction triggered by the preview component, jumping to a preview page and playing the updated posted object on the preview page. Wherein the played content includes the original object and the updated object configuration information. If there is the interactive operation information in the original posted object, then when the preview instruction triggered by the preview component is detected, the terminal device may jump to the preview page and play the updated posted object on the preview page, wherein the played content includes the original object, updated object configuration information and interactive operation information. In this way, the poster can check the re-posted object (i.e., the updated posted object) before uploading, to ensure that the updated posted object is what the poster wants, and thus improving the modification experience of the poster.

To sum up, the arrangements of the present disclosure can directly modify and upload the object configuration information to obtain the updated posted object, thereby avoiding the repetitive work caused by re-uploading the entire modified posted object, and at the same time retaining the original interactive operation information, and even retaining the posting time of the first post. Therefore, while simplifying the user operation, the user's demand for retaining more front-end original data is met, and the user experience is generally improved.

In addition, before uploading the updated configuration information, the electronic device can obtain a new label of the posted object based on the updated configuration information, and upload the new label to the server, so that the server can share the updated posted object with more matching users by combining the new label in the subsequent sharing process, and improve the breadth and accuracy of information shared by the server.

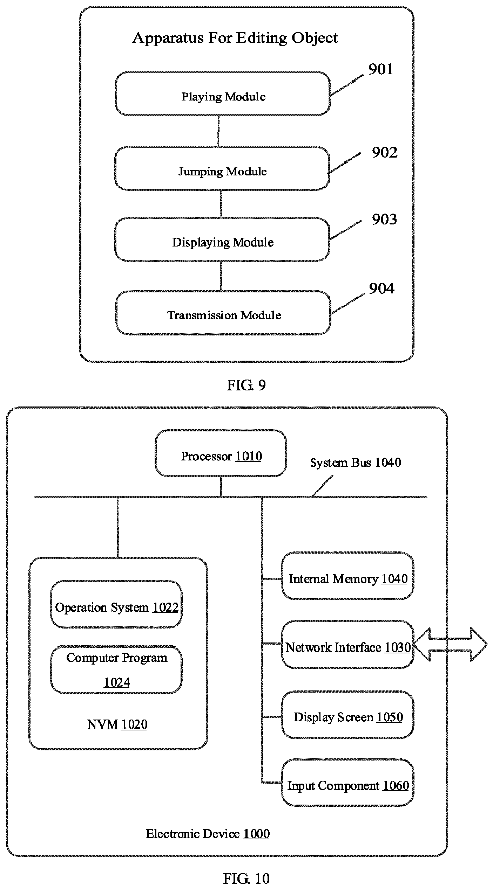

FIG 9 is a block diagram of an apparatus 900 for editing an object according to an exemplary arrangement. Referring to FIG. 9, the apparatus includes a playing module 901, a jumping module 902, a displaying module 903 and a transmission module 904.

The playing module 901 is configured to play a posted object on a current play page, wherein the current play page comprises a re-editing component, and the posted object comprises an original object and object configuration information.

The jumping module 902 is configured to jump to an edit page in response to detecting an edit instruction triggered by the re-editing component, wherein the edit page comprises an updating component.

The displaying module 903 is configured to update the object configuration information and display the updated object configuration information on the edit page, in response to detecting an update instruction triggered by the updating component, wherein the object configuration information comprises configuration information associated with content of the original object.

The transmission module 904 is configured to upload the updated object configuration information in response to detecting an upload instruction, so that when a user terminal plays an updated posted object, the played content comprises the original object and the updated object configuration information.

In some possible arrangements, the object configuration information includes first dimension configuration information and second dimension configuration information.

The first dimension configuration information is object parameter configuration information, and the second dimension configuration information is object content configuration information.

Or, the first dimension configuration information is the object content configuration information, and the second dimension configuration information is the object parameter configuration information;

The object content configuration information is configuration information associated with the content of the original object, and the object parameter configuration information is configuration information associated with external parameters of the original object.

In some possible arrangements, the object parameter configuration information may include at least one of: geographic location information, topic information to which the original object belongs, description information of the original object, and friend reminder information; and the object content configuration information may include at least one of: soundtrack information, clip information, picture size adjustment information, front cover information, and additional picture display information.

In some possible arrangements, the re-editing component includes a first re-editing component; wherein the jumping module is configured to jump to a first edit page, in response to detecting a first edit instruction triggered by the first re-editing component, wherein the first edit page comprises a first updating component; and the displaying module is configured to update the first dimension configuration information and display the updated first dimension configuration information on the edit page, in response to detecting a first update instruction triggered by the first updating component.

In some possible arrangements, the re-editing component includes a second re-editing component; wherein the jumping module is configured to jump to a second edit page in response to detecting a second edit instruction triggered by the second re-editing component; wherein the second edit page comprises a second updating component; and the displaying module is configured to update the second dimension configuration information and display the updated second dimension configuration information on the edit page, in response to detecting a second update instruction triggered by the second updating component.

In some possible arrangements, the jumping module is configured to jump to a first edit page in response to detecting the edit instruction triggered by the re-editing component; wherein the first edit page comprises a first updating component and a page jumping component; the displaying module is configured update the first dimension configuration information and display the updated first dimension configuration information on the first edit page, in response to detecting a first update instruction triggered by the first updating component; the jumping module is configured to jump to a second edit page in response to detecting a page jump instruction triggered by the page jumping component; wherein the second edit page comprises a second updating component; and the displaying module is configured to update the second dimension configuration information and display the updated second dimension configuration information on the second edit page, in response to detecting a second update instruction triggered by the second updating component.

In some possible arrangements, the apparatus further includes an acquisition module, which is configured to acquire the posted object from the server in response to detecting a play instruction of the posted object.

In some possible arrangements, the edit page further includes a preview component; the playing module is configured to jump to a preview page and play the updated posted object on the preview page, in response to detecting a preview instruction triggered by the preview component, wherein the played content comprises the original object and the updated object configuration information.

In some possible arrangements, the posted object further includes interactive operation information; the transmission module is configured to upload the updated object configuration information in response to detecting the upload instruction, so that when the user terminal plays the updated posted object, the played content comprises the original object, the updated object configuration information and the interactive operation information.

Regarding the apparatus in the above-mentioned arrangement, the specific manner in which each module performs operations has been described in detail in the arrangement of the method, and will not be described in detail herein.

FIG 10 is a block diagram of an electronic device 1000 for editing an object according to some exemplary arrangements.

The electronic device may be a server or a terminal device, and its internal structure diagram may be as shown in FIG 10. The electronic device 1000 includes a processor 1010, memory, and a network interface 1030 connected via a system bus 1040. Among them, the processor 1010 of the electronic device is used to provide computing and control capabilities. The memory of the electronic device includes a non-volatile memory (NVM) 1020 and an internal memory 1040. The NVM 1020 stores an operating system 1022 and a computer program 1024. The internal memory 1040 provides an environment for the execution of the operating system 1022 and computer programs 1024 in the NVM 1020. The network interface 1030 of the electronic device 100 is used to communicate with an external terminal through a network connection. The computer program, when executed by the processor, implements the method for editing an object. The electronic device 1000 also includes a display screen 1050 and an input component 1060 (e.g., touchscreen, mouse, keyboard, microphone, camera, and so on).

Those skilled in the art can understand that the structure shown in FIG. 10 is only a block diagram of a partial structure related to the solution of the present disclosure, and does not constitute a limitation on the electronic device to which the solution of the present disclosure is applied. The specific electronic device may include more or fewer components than shown in the figures, or combine certain components, or have a different arrangement of components.

In an exemplary arrangement, an electronic device is also provided, comprising: a processor; memory for storing instructions executable by the processor; wherein the processor is configured to execute the instructions to implement the method for editing an object described as arrangements of the present disclosure.

In an exemplary arrangement, a computer-readable storage medium is also provided, when the instructions in the computer-readable storage medium are executed by the processor of the electronic device, the electronic device can perform the method for editing an object described as arrangements of the present disclosure.

In an exemplary arrangement, a computer program product is also provided, the computer program product includes a computer program, the computer program is stored in a readable storage medium, and at least one processor of the computer device reads from the readable storage medium and executes the computer program to cause the computer device to perform the method for editing an object described as arrangements of the present disclosure.

Those of ordinary skill in the art can understand that all or part of the processes in the methods of the above arrangements can be implemented by instructing relevant hardware through a computer program, and the computer program can be stored in a non-volatile computer-readable storage medium. When the computer program is executed, it may include the processes of the above-mentioned method arrangements. Wherein, any reference to memory, storage, database or other medium used in the various arrangements provided in the present disclosure may include non-volatile memory and/or volatile memory. The Non-volatile memory may include read only memory (ROM), programmable ROM (PROM), electrically programmable ROM (EPROM), electrically erasable programmable ROM (EEPROM), or flash memory. The volatile memory may include random access memory (RAM) or external cache memory. By way of illustration and not limitation, RAM is available in various forms such as static RAM (SRAM), dynamic RAM (DRAM), synchronous DRAM (SDRAM), double data rate SDRAM (DDRSDRAM), enhanced SDRAM (ESDRAM), synchronous chain Road (Synchlink) DRAM (SLDRAM), memory bus (Rambus) direct RAM (RDRAM), direct memory bus dynamic RAM (DRDRAM), and memory bus dynamic RAM (RDRAM), etc.

Preferred embodiments of the invention are specified in the following paragraphs.

Method for editing an object, comprising: playing (S201) a posted object on a current play page, wherein the current play page comprises a re-editing component, and the posted object comprises an original object and object configuration information; in response to detecting an edit instruction triggered by the re-editing component, jumping (S203) to an edit page, wherein the edit page comprises an updating component; in response to detecting an update instruction triggered by the updating component, updating (S205) the object configuration information and displaying the updated object configuration information on the edit page, wherein the object configuration information comprises configuration information associated with content of the original object; and in response to detecting an upload instruction, uploading (S207) the updated object configuration information, so that when a user terminal plays an updated posted object, the played content comprises the original object and the updated object configuration information.

Method according to paragraph [00128], wherein the object configuration information comprises first dimension configuration information and second dimension configuration information; the first dimension configuration information is object parameter configuration information, and the second dimension configuration information is object content configuration information; or the first dimension configuration information is the object content configuration information, and the second dimension configuration information is the object parameter configuration information; the object content configuration information is configuration information associated with the content of the original object, and the object parameter configuration information is configuration information associated with external parameters of the original object.

Method according to paragraph [00129], wherein the object parameter configuration information comprises at least one of: geographic location information, topic information to which the original object belongs, description information of the original object, and friend reminder information; and the object content configuration information comprises at least one of: soundtrack information, clip information, picture size adjustment information, front cover information, and additional picture display information.

Method according to paragraph [00129], wherein the re-editing component comprises a first re-editing component; wherein said in response to detecting the edit instruction triggered by the re-editing component, jumping to the edit page, wherein the edit page comprises the updating component, and in response to detecting the update instruction triggered by the updating component, updating object configuration information and displaying the updated object configuration information on the edit page comprises: in response to detecting a first edit instruction triggered by the first re-editing component, jumping to a first edit page, wherein the first edit page comprises a first updating component; and in response to detecting a first update instruction triggered by the first updating component, updating the first dimension configuration information and displaying the updated first dimension configuration information on the edit page.

Method according to paragraph [00129], wherein the re-editing component comprises a second re-editing component; wherein said in response to detecting the edit instruction triggered by the re-editing component, jumping to the edit page, and in response to detecting the update instruction triggered by the updating component, updating object configuration information and displaying the updated object configuration information on the edit page comprises: in response to detecting a second edit instruction triggered by the second re-editing component, jumping to a second edit page, wherein the second edit page comprises a second updating component; and in response to detecting a second update instruction triggered by the second updating component, updating the second dimension configuration information and displaying the updated second dimension configuration information on the edit page.

Method according to paragraph [00129], wherein said in response to detecting the edit instruction triggered by the re-editing component, jumping to the edit page, and in response to detecting the update instruction triggered by the updating component, updating object configuration information and displaying the updated object configuration information on the edit page comprises: in response to detecting the edit instruction triggered by the re-editing component, jumping to a first edit page, wherein the first edit page comprises a first updating component and a page jumping component; in response to detecting a first update instruction triggered by the first updating component, updating the first dimension configuration information and displaying the updated first dimension configuration information on the first edit page; in response to detecting a page jump instruction triggered by the page jumping component, jumping to a second edit page, wherein the second edit page comprises a second updating component; and in response to detecting a second update instruction triggered by the second updating component, updating the second dimension configuration information and displaying the updated second dimension configuration information on the second edit page.

Method according to any one of paragraphs [00129-00133], the method further comprises in response to detecting a play instruction of the posted object, acquiring the posted object from the server.

Method according to paragraph [00128], the edit page further comprises a preview component; the method further comprises in response to detecting a preview instruction triggered by the preview component, jumping to a preview page and playing the updated posted object on the preview page, wherein the played content comprises the original object and the updated object configuration information.

Method according to paragraph [00128], the posted object further comprises interactive operation information; wherein said in response to detecting the upload instruction, uploading the updated object configuration information, so that when the user terminal plays the updated posted object, the played content comprises the original object and the updated object configuration information comprises: in response to detecting the upload instruction, uploading the updated object configuration information, so that when the user terminal plays the updated posted object, the played content comprises the original object, the updated object configuration information and the interactive operation information.

Apparatus for editing an object, comprising: a playing module (901) configured to play a posted object on a current play page, wherein the current play page comprises a re-editing component, and the posted object comprises an original object and object configuration information; a jumping module (902) configured to jump to an edit page in response to detecting an edit instruction triggered by the re-editing component, wherein the edit page comprises an updating component; a displaying module (903) configured to update the object configuration information and display the updated object configuration information on the edit page, in response to detecting an update instruction triggered by the updating component, wherein the object configuration information comprises configuration information associated with content of the original object; and a transmission module (904) configured to upload the updated object configuration information in response to detecting an upload instruction, so that when a user terminal plays an updated posted object, the played content comprises the original object and the updated object configuration information.

Apparatus according to paragraph [00137], wherein the object configuration information comprises first dimension configuration information and second dimension configuration information; the first dimension configuration information is object parameter configuration information, and the second dimension configuration information is object content configuration information; or the first dimension configuration information is the object content configuration information, and the second dimension configuration information is the object parameter configuration information; the object content configuration information is configuration information associated with the content of the original object, and the object parameter configuration information is configuration information associated with external parameters of the original object.

Apparatus according to paragraph [00138], wherein the object parameter configuration information comprises at least one of: geographic location information, topic information to which the original object belongs, description information of the original object, and friend reminder information; and the object content configuration information comprises at least one of: soundtrack information, clip information, picture size adjustment information, front cover information, and additional picture display information.

Apparatus according to paragraph [00139], wherein the re-editing component comprises a first re-editing component; wherein the jumping module (902) is configured to jump to a first edit page, in response to detecting a first edit instruction triggered by the first re-editing component, wherein the first edit page comprises a first updating component; and the displaying module (903) is configured to update the first dimension configuration information and display the updated first dimension configuration information on the edit page, in response to detecting a first update instruction triggered by the first updating component.

Apparatus according to paragraph [00139], wherein the re-editing component comprises a second re-editing component; the jumping module (902) is configured to jump to a second edit page in response to detecting a second edit instruction triggered by the second re-editing component; wherein the second edit page comprises a second updating component; and the displaying module (903) is configured to update the second dimension configuration information and display the updated second dimension configuration information on the edit page, in response to detecting a second update instruction triggered by the second updating component.

Non-transitory computer-readable storage medium, wherein when the instructions in the computer-readable storage medium are executed by a processor of an electronic device, the method for editing an object according to any one of paragraphs [00129-00136] is implemented by the electronic device.

Other arrangements of the present disclosure will readily occur to those skilled in the art upon consideration of the specification and practice of the application disclosed herein. This application is intended to cover any variations, uses, or adaptations of the present disclosure that follow the general principles of the present disclosure and include common knowledge or techniques in the technical field not disclosed by the present disclosure. The specification and examples are to be regarded as exemplary only, with the true scope and spirit of the disclosure being indicated by the following claims.

It is to be understood that the present disclosure is not limited to the precise structures described above and illustrated in the accompanying drawings, and that various modifications and changes may be made without departing from the scope thereof. The scope of the present disclosure is limited only by the appended claims.

## Claims

1. A method for editing an object, comprising:
playing (S201) a posted object on a current play page, wherein the current play page comprises a re-editing component, and the posted object comprises an original object and object configuration information;
in response to detecting an edit instruction triggered by the re-editing component, jumping (S203) to an edit page, wherein the edit page comprises an updating component;
in response to detecting an update instruction triggered by the updating component, updating (S205) the object configuration information and displaying the updated object configuration information on the edit page, wherein the object configuration information comprises configuration information associated with content of the original object; and
in response to detecting an upload instruction, uploading (S207) the updated object configuration information, wherein in response to that a user terminal plays an updated posted object, the played content comprises the original object and the updated object configuration information.

2. The method according to claim 1, wherein the object configuration information comprises first dimension configuration information and second dimension configuration information;
the first dimension configuration information is object parameter configuration information, and the second dimension configuration information is object content configuration information; or
the first dimension configuration information is the object content configuration information, and the second dimension configuration information is the object parameter configuration information;
the object content configuration information is configuration information associated with the content of the original object, and the object parameter configuration information is configuration information associated with external parameters of the original object.

3. The method according to claim 2, wherein the object parameter configuration information comprises at least one of: geographic location information, topic information to which the original object belongs, description information of the original object, and friend reminder information; and
the object content configuration information comprises at least one of: soundtrack information, clip information, picture size adjustment information, front cover information, and additional picture display information.

4. The method according to claim 2, wherein the re-editing component comprises a first re-editing component;
wherein said in response to detecting the edit instruction triggered by the re-editing component, jumping to the edit page, wherein the edit page comprises the updating component, and in response to detecting the update instruction triggered by the updating component, updating object configuration information and displaying the updated object configuration information on the edit page comprises:
in response to detecting a first edit instruction triggered by the first re-editing component, jumping to a first edit page, wherein the first edit page comprises a first updating component; and
in response to detecting a first update instruction triggered by the first updating component, updating the first dimension configuration information and displaying the updated first dimension configuration information on the edit page.

5. The method according to claim 2, wherein the re-editing component comprises a second re-editing component;
wherein said in response to detecting the edit instruction triggered by the re-editing component, jumping to the edit page, and in response to detecting the update instruction triggered by the updating component, updating object configuration information and displaying the updated object configuration information on the edit page comprises:
in response to detecting a second edit instruction triggered by the second re-editing component, jumping to a second edit page, wherein the second edit page comprises a second updating component; and
in response to detecting a second update instruction triggered by the second updating component, updating the second dimension configuration information and displaying the updated second dimension configuration information on the edit page.

6. The method according to claim 2, wherein said in response to detecting the edit instruction triggered by the re-editing component, jumping to the edit page, and in response to detecting the update instruction triggered by the updating component, updating object configuration information and displaying the updated object configuration information on the edit page comprises:
in response to detecting the edit instruction triggered by the re-editing component, jumping to a first edit page, wherein the first edit page comprises a first updating component and a page jumping component;
in response to detecting a first update instruction triggered by the first updating component, updating the first dimension configuration information and displaying the updated first dimension configuration information on the first edit page;
in response to detecting a page jump instruction triggered by the page jumping component, jumping to a second edit page, wherein the second edit page comprises a second updating component; and
in response to detecting a second update instruction triggered by the second updating component, updating the second dimension configuration information and displaying the updated second dimension configuration information on the second edit page.

7. The method according to any one of claims 1-6, further comprising:
in response to detecting a play instruction of the posted object, acquiring the posted object from the server.

8. The method according to claim 1, wherein the edit page further comprises a preview component;
the method further comprises:
in response to detecting a preview instruction triggered by the preview component, jumping to a preview page and playing the updated posted object on the preview page, wherein the played content comprises the original object and the updated object configuration information.

9. The method according to claim 1, wherein the posted object further comprises interactive operation information;
wherein said in response to detecting the upload instruction, uploading the updated object configuration information, wherein in response to that the user terminal plays the updated posted object, the played content comprises the original object and the updated object configuration information comprises:
in response to detecting the upload instruction, uploading the updated object configuration information, wherein in response to that the user terminal plays the updated posted object, the played content comprises the original object, the updated object configuration information and the interactive operation information.

10. An apparatus for editing an object, comprising:
a playing module (901) configured to play a posted object on a current play page, wherein the current play page comprises a re-editing component, and the posted object comprises an original object and object configuration information;
a jumping module (902) configured to jump to an edit page in response to detecting an edit instruction triggered by the re-editing component, wherein the edit page comprises an updating component;
a displaying module (903) configured to update the object configuration information and display the updated object configuration information on the edit page, in response to detecting an update instruction triggered by the updating component, wherein the object configuration information comprises configuration information associated with content of the original object; and
a transmission module (904) configured to upload the updated object configuration information in response to detecting an upload instruction, wherein in response to that a user terminal plays an updated posted object, the played content comprises the original object and the updated object configuration information.

11. The apparatus according to claim 10, wherein the object configuration information comprises first dimension configuration information and second dimension configuration information;
the first dimension configuration information is object parameter configuration information, and the second dimension configuration information is object content configuration information; or
the first dimension configuration information is the object content configuration information, and the second dimension configuration information is the object parameter configuration information;
the object content configuration information is configuration information associated with the content of the original object, and the object parameter configuration information is configuration information associated with external parameters of the original object.

12. The apparatus according to claim 11, wherein,
wherein the object parameter configuration information comprises at least one of: geographic location information, topic information to which the original object belongs, description information of the original object, and friend reminder information; and
the object content configuration information comprises at least one of: soundtrack information, clip information, picture size adjustment information, front cover information, and additional picture display information.

13. The apparatus according to claim 11, wherein the re-editing component comprises a first re-editing component;
wherein the jumping module (902) is configured to jump to a first edit page, in response to detecting a first edit instruction triggered by the first re-editing component, wherein the first edit page comprises a first updating component; and
the displaying module (903) is configured to update the first dimension configuration information and display the updated first dimension configuration information on the edit page, in response to detecting a first update instruction triggered by the first updating component.

14. The apparatus according to claim 11, wherein the re-editing component comprises a second re-editing component;
the jumping module (902) is configured to jump to a second edit page in response to detecting a second edit instruction triggered by the second re-editing component; wherein the second edit page comprises a second updating component; and
the displaying module (903) is configured to update the second dimension configuration information and display the updated second dimension configuration information on the edit page, in response to detecting a second update instruction triggered by the second updating component.

15. A non-transitory computer-readable storage medium, wherein when the instructions in the computer-readable storage medium are executed by a processor of an electronic device, the method for editing an object according to any one of claims 1 to 9 is implemented by the electronic device.
